Europäisches Patentamt

European Patent Office

Office européen des brevets

(19)

(11) **EP 0 986 262 A2**

(12) **EUROPEAN PATENT APPLICATION**

(43) Date of publication:
**15.03.2000 Bulletin 2000/11**

(51) Int Cl.$^7$: **H04N 7/36**

(21) Application number: **99202758.1**

(22) Date of filing: **26.08.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (71) Applicant: **Texas Instruments Incorporated Dallas, Texas 75251 (US)** |
| (30) Priority: **31.08.1998 US 98659 P**<br>**08.10.1998 US 103539 P** | (72) Inventor: **Zhou, Minhua**<br>**Plano, Texas 75093 (US)** |
| | (74) Representative: **Holt, Michael**<br>**Texas Instruments Limited,**<br>**P.O. Box 5069**<br>**Northampton NN4 7ZE (GB)** |

(54) **Unrestricted motion compensation**

(57) Object-based motion compensation using extended bounding box(es) for reference VOP blocks.

FIG. 5

EP 0 986 262 A2

**Description**

FIELD OF THE INVENTION

The present invention relates to electronic image methods and devices, and more particularly, to digital communication and storage systems with compressed images.

BACKGROUND OF THE INVENTION

Video communication (television, teleconferencing, Internet, and so forth) typically transmits a stream of video frames (pictures, images) along with audio over a transmission channel for real-time viewing and listening or storage. However, transmission channels frequently add corrupting noise and have limited bandwidth. Consequently, digital video transmission with compression enjoys widespread use. In particular, various standards for compression of digital video have emerged and include MPEG-4.

MPEG-4 uses a content based coding (i.e., objects are separately coded) approach with functionalities such as scalability, content based manipulations, robustness in error prone environments, multimedia data access tools, improved coding efficiency, ability to encode both graphics and video, and improved random access. A video-coding scheme is considered content scalable if the number and/or quality of simultaneous objects coded can be varied. Object scalability refers to controlling the number of simultaneous objects coded and quality scalability refers to controlling the spatial and/or temporal resolutions of the coded objects. Scalability is an important feature for video coding methods operating across transmission channels of limited bandwidth and also channels where the bandwidth is dynamic. For example, a content scalable video coder has the ability to optimize the performance in the face of limited bandwidth by encoding and transmitting only the important objects in the scene at a high quality. It can then choose to either drop the remaining objects or code them at a much lower quality. When the bandwidth of the channel increases, the coder can then transmit additional bits to improve the quality of the poorly coded objects or restore the missing objects. The video object at a given time is called the video object plane (VOP), so a frame may include a number of VOPs.

MPEG-4 has an image padding technique, i.e., repetitive padding to fill out boundary macro-blocks and extended padding for abutting transparent macro-blocks. This padding is applied to the reference VOP prior to motion estimation-compensation. In principle, the padding technique fills the areas outside the VOP by repeating the boundary pixels of the VOP. Note that the padding should be performed with respect to the reconstructed binary shape. Each boundary pixel is repeated towards the exterior of the VOP. If a pixel outside of the VOP can be covered by the repetition of more than one boundary pixel, the average of the repeated values is taken.

MPEG-4 also has unrestricted motion compensation in which motion vectors are allowed to point outside the decoded area of a reference VOP. For an arbitrary shape VOP, the decoded area refers to the area within the bounding box, padded as previously described. A bounding box is defined by vop_width and vop_height extended to a multiple of 16. When a sample referenced by a motion vector stays outside the decoded VOP area, an edge sample is used. This edge sample is retrieved by limiting the motion vector to the last full pixel position inside the decoded VOP area. Limitation (clipping) of a motion vector is performed on a sample basis and separately for each component of the motion vector. This entails significant computation.

SUMMARY OF THE INVENTION

The teachings of the present application disclose object-based video compression and decoding methods and systems with extended bounding boxes for reference video object planes (VOPs) for use with unrestricted motion compensation.

This has the advantage of simplified unrestricted motion compensation.

BRIEF DESCRIPTION OF THE DRAWINGS

The present invention will now be further described, by way of example, with reference to the certain exemplary embodiments illustrated in the accompanying drawings in which:

Figures 1a-1b illustrate preferred embodiment extended padding.

Figure 2 is a functional diagram for padding.

Figure 3 shows repetitive and extended padding.

Figure 4 illustrates unrestricted motion compensation.

Figure 5 demonstrates a preferred embodiment extended bounding box.

Figure 6 shows preferred embodiment unrestricted motion compensation.

DESCRIPTION OF THE PREFERRED EMBODIMENTS

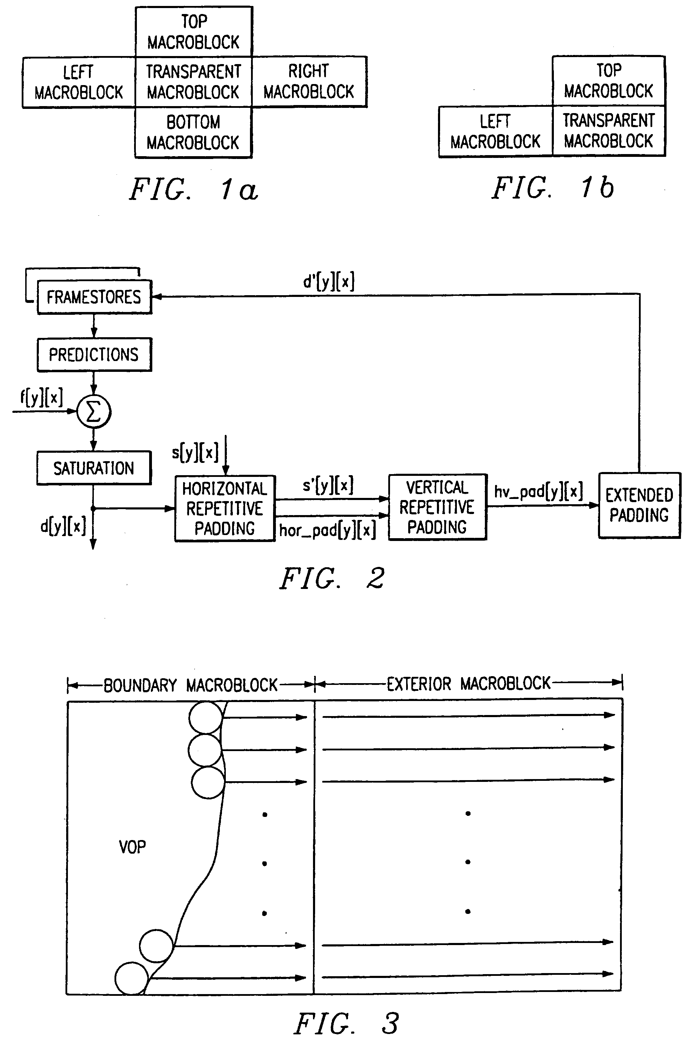

The preferred embodiment extended padding methods simplify extended padding by limiting the analysis to (macro-) blocks which would have already been decoded by the time of decoding the (macro-) block to be padded; that is, only abutting (macro-) blocks earlier in scan order are considered for extended padding. Figures la-lb illustrate the simplification. Figure la shows a central exterior (transparent) macro-block and the four abutting macro-blocks to be used for extended padding. In contrast, Figure 1b shows a central exterior (transparent) macro-block and the two abutting macro-blocks to be used for simplified extended padding; this presumes scanning the macro-blocks from left to right and from top to bottom in Figure 1b. The simplification to use only already-decoded macro-blocks avoids the delay inherent in waiting for the right and bottom macro-blocks to be decoded with only a minimal decrease in coding efficiency.

For unrestricted motion compensation the preferred embodiment extends reference VOP bounding boxes by 16 pixels in each direction (vertical first and then horizontal) to simplify the computations.

Explanation of the preferred embodiment extended padding can be most easily accomplished by first considering the current MPEG-4 extended padding. Figure 2 is a block diagram of a system using macro-block-based repetitive and extended padding. Figure 3 heuristically illustrates repetitive padding in a boundary macro-block and extended padding into an abutting exterior (transparent) macro-block.

The padding process defines the values of luminance and chrominance samples (pixels) outside of the VOP for prediction of arbitrarily shaped objects. A decoded macro-block d[y][x] is padded by referring to the corresponding decoded shape block s[y][x]. The luminance component is padded per 16 x 16 samples, while the chrominance components are padded per 8 x 8 samples. A macro-block that lies on the VOP boundary is padded by replicating the boundary samples of the VOP to samples in the macro-block but outside of the VOP. This process is divided into horizontal repetitive padding and vertical repetitive padding. The remaining macro-blocks that are completely outside the VOP (called exterior or transparent macro-blocks) are filled by extended padding. The padding process is applied to all macro-blocks inside the bounding rectangle of a VOP. The bounding rectangle of the luminance component is defined by VOP_width and VOP_height extended to multiples of 16, while that of the chrominance components is defined by (VOP_width >> 1) and (VOP_height >> 1) extended to multiples of 8. Each sample at the boundary of a VOP is replicated horizontally to the left and/or right direction in order to fill the transparent region outside of the VOP of a boundary macro-block. If there are two boundary sample values for filling a sample outside of the VOP, the two boundary samples are averaged.

The horizontally padded macro-block, hor_pad[y][x], is generated by any process equivalent to the following (expressed in the C language) for every line with at least one shape sample s[y][x] == 1 (which means inside the VOP):

```
For(x=0; x<N; x++) {
    If (s[y][x] == 1) { hor_pad[y][x] = d[y][x]; s'[y][x] = 1;}
    else {
        if ( s[y][x'] == 1 && s[y][x"] == 1) {
            hor_pad[y][x] = (d[y][x'] + d[y][x"])/2;
            s'[y][x] = 1;
        } else if (s[y][x'] == 1) {
            hor_pad[y][x] = d[y][x']; s'[y][x] = 1;
        }  else if (s[y][x"] == 1) {
            hor_pad[y][x] = d[y][x"] = d[y][x"]; s'[y][x] = 1;
        }
    }
}
```

where x' is the location of the nearest valid sample (i.e. s[y][x] == 1) at the VOP boundary to the left of the current location x, and x" is the location of the nearest boundary sample to the right, and N is the number of samples of a line.

Also, s'[y][x] is initialized to 0.

After the horizontal padding, perform analogous vertically padding for all samples where s' [y] [z] == 0 (not in the VOP nor horizontally padded). The samples filled by the horizontal padding are treated as if they were inside the VOP for the purpose of the vertical padding.

The vertical padding to yield the repetitively padded macro-block, hv_pad[y][x], is generated by any process equivalent to the following for every column with at least one sample of the horizontally padded macro-block, hor_pad [y][x].

```
For(y=0; y<M; y++) {
        If (s'[y][x] == 1)
        hv_pad[y][x] = hor_pad[y][x];
        else {
                if ( s'[y'][x] == 1 && s'[y"][x] == 1)
                 hv_pad[y][x]=(hor_pad[y'][x]+hor_pad[y"][x])/2;
                else if (s'[y'][x] == 1)
                 hv_pad[y][x] = hor_pad[y'][x];
                else if (s'[y"][x] == 1)
                 hv_pad[y][x] = hor_pad[y"][x]
        }
    }
```

where y' is the location of the nearest valid sample (i.e. s'[y][x] == 1) above the current location y at the boundary of hv_pad[y][x], y" is the location of the nearest boundary sample below, and M is the number of samples of a column. Note that this fills the entire boundary macro-block because at least one sample in VOP implies at least one horizontal line completely filled by the horizontal padding and this implies all other samples filled by the vertical column padding.

Extended padding fills exterior (transparent) macro-blocks (i.e. no sample (pixel) in the VOP) in one of two ways: (1) if the exterior macro-block abuts at least one boundary macro-block, then replicate from the border of an abutting boundary macro-block; (2) but if the exterior macro-block has none of its four abutting macro-blocks as a boundary macro-block, then fill with all samples being set equal to $2^{bits\_pixel - 1}$. Note that $2^{bits\_pixel - 1}$ equals 128 for 8-bit samples which have values in the range of 0-255. Exterior macro-blocks abutting boundary macro-block(s) are filled by replicating the samples at the border of a selected one of the abutting boundary macro-block(s). As noted, the boundary macro-blocks have been completely filled by the foregoing repetitive padding. If an exterior macro-block abuts more than one boundary macro-block, then chose one boundary macro-block for the replication (extended padding) as follows. Priority order the abutting macro-blocks of an exterior macro-block as: first, left macro-block, next, top macro-block, then, right macro-block, and lastly, bottom macro-block. Then when two or more boundary macro-blocks abut an exterior macro-block, replicate (rightwards, downwards, leftwards, or upwards) the border samples from the highest priority abutting boundary macro-block. See Figure la illustrating an exterior (transparent) macro-block and its four abutting macro-blocks.

The preferred embodiment simplified extended padding for exterior (transparent) macro-blocks differs from the foregoing and is as follows:

(1) If the left abutting macro-block is not transparent (i.e. it is a boundary macro-block or in the VOP), then pad the exterior (transparent) by replicating rightwards from the column of samples from the abutting vertical border of the left abutting macro-block.

(2) If the left abutting macro-block is transparent (e.g., it is not a boundary macro-block), but the top abutting macro-block is not transparent, then pad the exterior (transparent) macro-block by replicating downwards from the row of samples from the abutting horizontal border of the top abutting macro-block.

(3) If both the left and top abutting macro-blocks are transparent (e.g., not boundary macro-blocks), then pad the exterior (transparent) macro-block by setting all samples (pixels) equal to $2^{bits\_pixel - 1}$ (this equals 128 for 8-bit samples which have values in the range of 0-255).

The preferred embodiment simplified extended padding thus, for example, will fill an exterior macro-block with $2^{bits\_pixel - 1}$ valued samples (pixels) even if the right abutting macro-block is a boundary macro-block and the prior art extended padding would replicate the border of the right abutting macro-block to fill the exterior macro-block. That is, the preferred embodiment simplified extended padding only using replication from macro-blocks scanned prior to the exterior macro-block being padded.

The preferred embodiment padding uses the foregoing repetitive padding for boundary macro-blocks and the preferred embodiment simplified extended padding for exterior macro-blocks.

The preferred embodiment padding has minimal effect on coding efficiency as illustrated in the following experimental results. The experiments were carried out by using the current MoMuSYS Software (MoMuSys-FCD-V08-980717). The main coding parameters used in the simulations are listed in Table 1. In total five sequences were involved in the simulations as shown in Table 2. Each sequence has 100 coded frames, only the first frame is encoded as I-VOP. The experimental results are listed in Tables 3-5. The sequences are tested at three quantization scales (Qp= 10, 20, and 30), and at two different coding structures: M=1 (without B-VOPs) and M=3 (with B-VOPs). The results of Tables 3-5 show that the simplified preferred embodiment padding method approximately maintain the coding efficiency, because the increased percentage of used bits is very small.

Chrominance components are padded according to the foregoing for each 8 x 8 block. The padding is performed by referring to the shape block generated by decimating the shape block (s[y][x]) of the corresponding luminance component. A similar rule is applied to interlaced video based on field to enhance subjective quality of display in 4:2:0 format. For each 2 x 2 adjacent luminance shape samples of the same fields, the corresponding chrominance shape sample is set to 1 if any of the four luminance samples are 1. Otherwise the chrominance shape sample is set to 0. For each 2 x 2 adjacent luminance shape samples, the corresponding chrominance shape sample is set to 1 if any of the four luminance shape samples are 1. Otherwise the chrominance shape sample is set to 0.

Macro-blocks of interlaced VOP are padded according to the foregoing. The vertical padding of the luminance component, however, is performed for each field independently. A sample outside of a VOP is therefore filled with the value of the nearest boundary sample of the same field. Completely transparent blocks are padded with $2^{bits\_pixel - 1}$ (equals 128 for 8-bit samples).

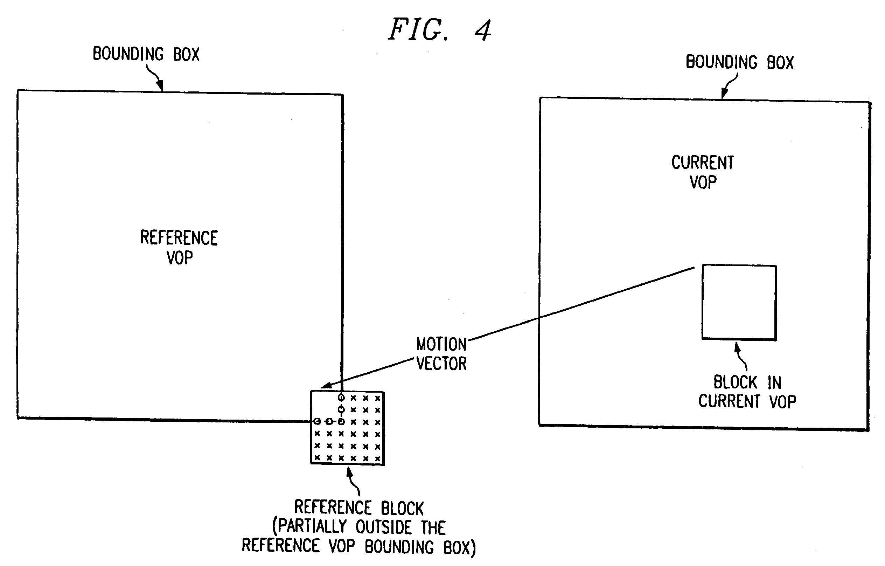

First consider MPEG-4 unrestricted motion compensation as illustrated in Figure 4 which is used for generating the motion-compensated macro-block for a macro-block in the current VOP. To produce the motion-compensated macro-block, both the decoded motion vectors and the previously decoded VOPs are involved, the motion vectors are used first to determine the reference blocks, and then to interpolate the samples in the reference blocks to form the motion-compensated macro-block. An outstanding characteristic of the MPEG-4 unrestricted motion compensation is that motion vectors are allowed to point outside the reference VOP as shown in Figure 4. In particular, the coordinates of a reference sample in the reference VOP, (yref, xref), is determined as follows:

$$xref = MIN(MAX( x+dx, vhmcsr ), xdim+vhmcsr-1 )$$

$$yref = MIN(MAX( y+dy, vvmcsr ), ydim+vvmcsr-1 )$$

where vhmcsr = vop_horizontal_mc_spatial_reference, vvmcsr = vop_vertical_mc_spatial_reference, (y,x) are the coordinates of a sample in the current VOP, (yref, xref) are the coordinates of a samle in the reference VOP, (dy,dx) is the motion vector, and (ydim, xdim) are the dimensions of the bounding box of the reference VOP. Note that for a rectangular VOP, a reference VOP is defined by:

video_object_layer_width; and
video_object_layer_height.

For an arbitrary shape VOP, a reference VOP of luminance is defined by vop_width and vopp_height extended to a multiple of 16, while that of chrominance is defined by (vop_width>>1) and (vop_height>>1) extended to a multiple of 8.

Thus when a sample referenced by a motion vector stays outside the decoded VOP area, an edge sample is used, and the edge sample is retrieved by clipping the motion vector to the last full pixel position inside the reference VOP. The clipping of a motion vector is performed on a sample basis and separately for each component of the motion vector. Because the vector clipping is sample-based, the unrestricted motion compensation could be very time-consuming. This is the consequence of the fact, that the motion vector has to be checked and eventually clipped for each sample in the macro-block in order to pick up the right sample value in the reference VOP.

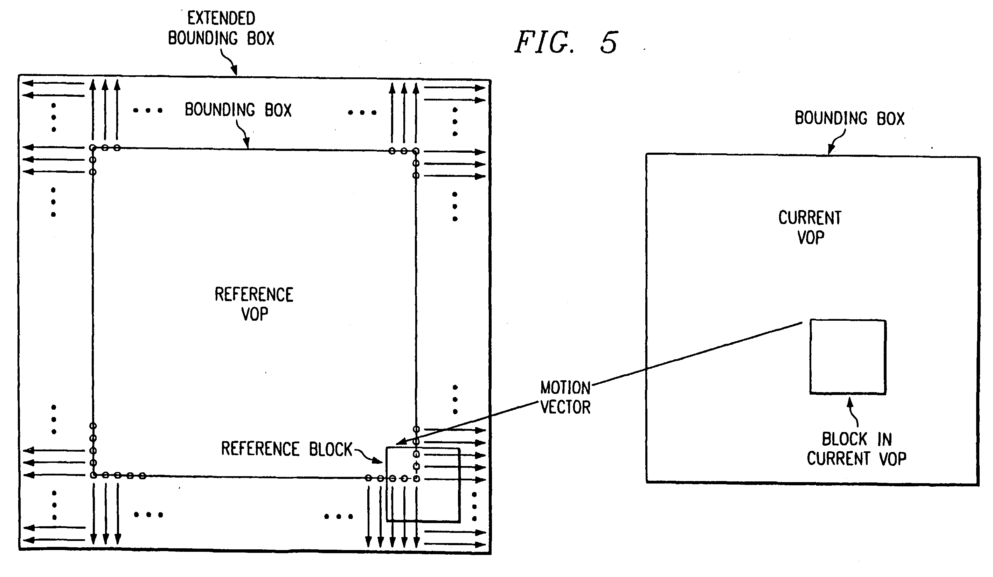

The preferred embodiments overcome the clipping computation consumption of unrestricted motion compensation by extending the reference VOP(s) bounding box(es) by 16 samples for luminance and by 8 samples for chrominance in all four directions as illustrated in Figure 5. The extended area is filled by extending the samples (pixel values) of the four edges of the reference VOP. Because a macro-block contains 16x16 luminance samples and 8x8 samples of each chrominance component, the extending of 16 samples for luminance and 8 samples for chrominance is necessary and sufficient for unrestricted motion compensation.

After extending the reference VOP(s) bounding box(es), unrestricted motion compensation can be simply implemented. Thus instead of checking and clipping motion vectors for each sample, unrestricted motion compensation can be implemented by checking and clipping motion vectors on a block by block basis. Because MPEG-4 motion compensation is performed on an 8x8 block basis, six 9x9 reference blocks are needed to be generated (4 for luminance and 2 for chrominance) for the unrestricted motion compensation.

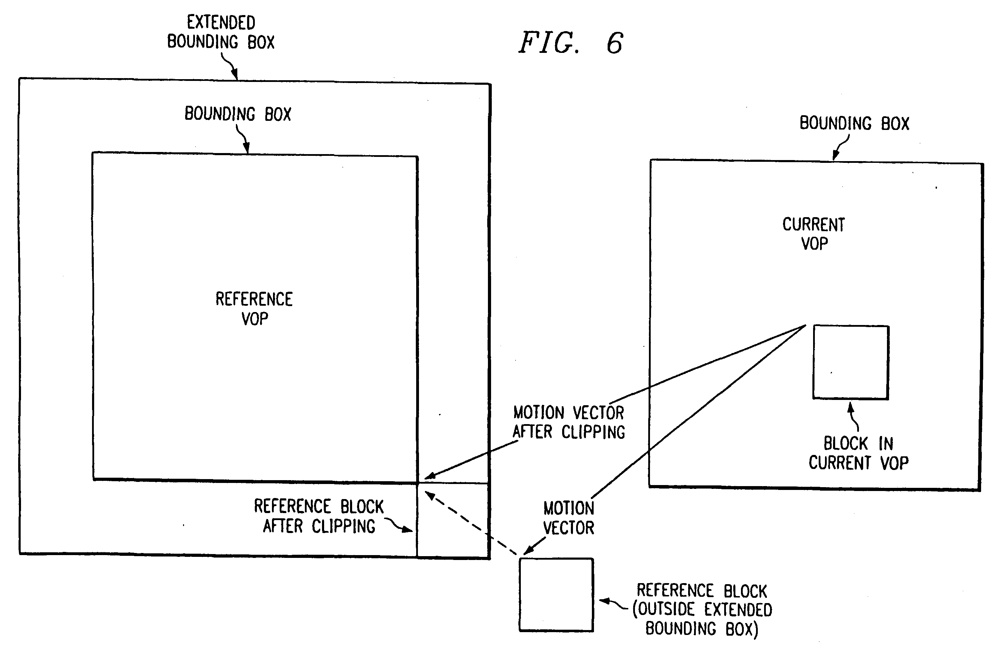

As shown in Figure 6, if a reference block is outside the extended reference VOP bounding box, then the motion vector can be clipped to move the reference block inside the extended reference VOP bounding box. Compared to the sample based motion vector checking and clipping, the computational complexity is reduced by a factor of 384/6 = 64.

The preferred embodiment may be varied while retaining the features of extended bounding box(es) for reference VOPs for unrestricted motion compensation. For example, the extension of the reference VOP bounding box could be by more than 16 (or 8) pixels and thus fewer motion vectors pointing outside of the extended bounding box.

**Claims**

1. A method of unrestricted motion compensation, comprising:

    (a) extending edge samples of a bounding box of a reference video object plane thereby forming an extended bounding box of said reference video object plane;
    (b) using said extended bounding box for reference blocks in motion compensation.

Table 1:

| Coding conditions used in the simulations | |
| --- | --- |
| Sequence format | CIF |
| Shape type | Binary |
| Encoding frame-rate | 10 Hz |
| Alpha_thr | 32 |
| Change_CR_disable | 0 |
| Rate Control | Same fixed Qp in I-, P-, B-VOPs |
| Deblocking filtering | OFF |
| Search range | 16 per coded frame |
| Quantization type | H.263 |

Table 2:

| The used video objects in the simulations | |
| --- | --- |
| Akiyo | VOP1 (foreground) |
| Children | VOP1 (two kids) |
| Coastguard | VOP1 (patrol boat) |
| Stefan | VOP1 (player) |
| Weather | VOP1 (foreground) |

Table 3:

| Comparison of totally used bits and PSNR at Qp = 10 | | | | | | | | |
|---|---|---|---|---|---|---|---|---|
| Seq. | M = 1 | | | | M = 3 | | | |
| | Total bits | | Aver. PSNR_Y[dB] | | Total bits | | Aver. PSNR_Y[dB] | |
| | FCD | Simp | FCD | Simp. | FCD | Simp. | FCD | Simp. |
| Akiyo | 401576 | 401240 | 33.83 | 33.83 | 446880 | 446472 | 33.73 | 33.73 |
| Children | 1372600 | 1369064 | 29.73 | 29.73 | 1515712 | 1513928 | 29.61 | 29.58 |
| Coastgd | 722296 | 724904 | 29.24 | 29.21 | 745552 | 746736 | 29.26 | 29.23 |
| Stefan | 667328 | 669544 | 29.11 | 29.12 | 691144 | 682048 | 29.10 | 29.10 |
| Weather | 832496 | 835112 | 31.75 | 31.75 | 915440 | 915672 | 31.69 | 31.68 |
| **Average** | **799259** | **799972** | **30.73** | **30.73** | **860945** | **860971** | **30.68** | **30.66** |
| *Diff.* | | *+0.09%* | | *0.00* | | *+0.003%* | | *-0.02* |

| | TOP<br>MACROBLOCK | |
|---|---|---|
| LEFT<br>MACROBLOCK | TRANSPARENT<br>MACROBLOCK | RIGHT<br>MACROBLOCK |
| | BOTTOM<br>MACROBLOCK | |

*FIG. 1a*

| | TOP<br>MACROBLOCK |
|---|---|
| LEFT<br>MACROBLOCK | TRANSPARENT<br>MACROBLOCK |

*FIG. 1b*

*FIG. 2*

*FIG. 3*

FIG. 4

BOUNDING BOX

BOUNDING BOX

REFERENCE
VOP

CURRENT
VOP

MOTION
VECTOR

BLOCK IN
CURRENT VOP

REFERENCE BLOCK
(PARTIALLY OUTSIDE THE
REFERENCE VOP BOUNDING BOX)

EP 0 986 262 A2

FIG. 5

BOUNDING BOX

CURRENT VOP

BLOCK IN CURRENT VOP

MOTION VECTOR

EXTENDED BOUNDING BOX

BOUNDING BOX

REFERENCE VOP

REFERENCE BLOCK

EXTENDED
BOUNDING BOX

*FIG. 6*

BOUNDING BOX

BOUNDING BOX

REFERENCE
VOP

CURRENT
VOP

MOTION VECTOR
AFTER CLIPPING

BLOCK IN
CURRENT VOP

REFERENCE BLOCK
AFTER CLIPPING

MOTION
VECTOR

REFERENCE BLOCK
(OUTSIDE EXTENDED
BOUNDING BOX)

EP 0 986 262 A2